# EUROPÄISCHE PATENTSCHRIFT

(11) **EP 3 958 036 B1**
(45) Veröffentlichungstag und Bekanntmachung des Hinweises auf die Patenterteilung: **15.01.2025**
(21) Anmeldenummer: 20191929.7
(22) Anmeldetag: 20.08.2020
(51) Int. Cl.: G02B 21/36

(54) **VERFAHREN UND VORRICHTUNG ZUM ERZEUGEN EINES ÜBERSICHTSKONTRASTBILDES EINES PROBENTRÄGERS IN EINEM MIKROSKOP**
METHOD AND DEVICE FOR CREATING AN OVERVIEW CONTRAST IMAGE OF A SAMPLE HOLDER IN A MICROSCOPE
PROCÉDÉ ET DISPOSITIF DE GÉNÉRATION D'UNE IMAGE À CONTRASTE DE SYNTHÈSE D'UN PORTE-ÉCHANTILLON DANS UN MICROSCOPE

(43) Veröffentlichungstag der Anmeldung: 23.02.2022
(73) Patentinhaber: Carl Zeiss Microscopy GmbH, 07745 Jena (DE)
(72) Erfinder: AMTHOR, Manuel, 07745 Jena (DE); HAASE, Daniel, 07751 Zöllnitz (DE)
(74) Vertreter: Wagner, Steffi

(56) Entgegenhaltungen:
- DE-A1- 102017 111 718
- US-A1- 2018 024 346

## Beschreibung

Die Erfindung betrifft ein Verfahren zum Erzeugen eines Übersichtskontrastbildes eines Probenträgers in einem Mikroskop, das eine auf dem Probenträger angeordnete Probe abbildet. Der Probenträger, auf dem sich die Probe befindet, wird im Durchlicht aus einem zweidimensionalen Beleuchtungsarray beleuchtet, das individuell schaltbare Einzellichtquellen hat und es werden mehrere verschiedene Roh-Übersichtsbilder des Probenträgers, auf dem sich die Probe befindet, aufgenommen. Weiter betrifft die Erfindung eine Vorrichtung zum Erzeugen eines Übersichtskontrastbildes eines in einem Probenvolumen anzuordnenden Probenträgers in einem Mikroskop. Die Vorrichtung weist eine Kamera, die ein das Probenvolumen erfassende Bildfeld aufweist, in dem der Probenträger mit einer darauf befindlichen Probe anzuordnen ist, ein zweidimensionales Beleuchtungsarray, das individuell schaltbare Einzellichtquellen hat und das Probenvolumen im Durchlicht beleuchtet, und eine Verarbeitungseinrichtung, die die Kamera ansteuert und ausliest, um mehrere verschiedene Roh-Übersichtsbilder des Probenträgers aufzunehmen, auf.

Aus der DE 2017 111 718 A1 ist ein Verfahren zur Erzeugung und Analyse eines Übersichtskontrastbildes bekannt. Durch unterschiedliche Beleuchtungen der Probe werden mindestens zwei Übersichtsrohbilder aufgenommen, welche zu einem Übersichtskontrastbild kombiniert werden. Die unterschiedlichen Beleuchtungen werden dabei durch eine Verschiebung der Probe lateral zum Beleuchtungsmuster, zeitlich unterschiedliche Beleuchtungen oder die Beleuchtung mit unterschiedlichen Beleuchtungsmustern, realisiert.

Aus der US 8 400 710 B2 ist eine Vorrichtung zum Beobachten einer Probe bekannt. Durch ein Beleuchtungsmuster werden helle und dunkle Bereiche definiert. Dies ermöglicht es, ein Bild mittels Dunkelfeld-Beobachtung an eine Verarbeitungseinrichtung zu übermitteln.

Das Dokument US 2018/024346 A1 beschreibt ein Verfahren zur Halo-Reduktion von Bildern. Dabei werden Einzelbilder aufgenommen, die mit unterschiedlichen Gruppen von Lichtquellen beleuchtet werden. Korrespondierende Pixel dieser Einzelbilder werden untereinander verglichen und die Pixel erhalten entsprechend ihrer Intensität Helligkeitsränge. Zur Halo-Reduktion kann ein Benutzer die Ausgabe eines Bildes veranlassen, in dem nur die Pixel mit einem bestimmten Helligkeitsrang dargestellt werden.

Es soll ein Verfahren und eine Vorrichtung zum Erzeugen eines Übersichtskontrastbildes eines Probenträgers in einem Mikroskop, das die Probe abbildet, bereitgestellt werden.

Die Erfindung ist im Anspruch 1 und im Anspruch 7 definiert. Vorteilhafte Weiterbildungen sind in den abhängigen Ansprüchen angegeben. Die bevorzugten Ausführungsformen gelten auf dieselbe Weise für das Verfahren und die Vorrichtung.

Es wird ein Verfahren und eine Vorrichtung zum Erzeugen eines Übersichtskontrastbildes eines Probenträgers in einem Mikroskop, das ein Probenvolumen hat, in dem der Probenträger mit einer Probe anordenbar ist, und diese dann abbildet, bereitgestellt. In einem Schritt a) wird das Probenvolumen, d.h. der dort i.d.R. angeordnete Probenträger, auf dem sich die Probe befindet, im Durchlicht aus einem zweidimensionalen Beleuchtungsarray, das individuell schaltbare Einzellichtquellen hat, beleuchtet. Beispielsweise wird als zweidimensionales Beleuchtungsarray ein LED-Array mit einer Anzahl N Einzel-LEDs verwendet.

In einem Schritt b) werden mehrere Roh-Übersichtsbilder des Probenträgers aufgenommen. In der Vorrichtung erfolgt diese Aufnahme mit einer Kamera, die das Probenvolumen erfasst und mit einer Verarbeitungseinrichtung über elektrische Leitungen, Funk, oder Ähnliches verbunden ist. Alle Roh-Übersichtsbilder werden mit derselben Kamera und bevorzugt denselben Bildaufnahmeparametern aufgenommen. Die Position dieser Kamera bleibt über die Aufnahme aller Roh-Übersichtsbilder hinweg gleich.

Jedes der Roh-Übersichtsbilder wird erzeugt, indem genau eine der Einzellichtquellen eingeschaltet wird, wobei für jedes Roh-Übersichtsbild eine andere Einzellichtquelle eingeschaltet wird, sodass N Roh-Übersichtsbilder aufgenommen werden. In der Vorrichtung ist die Verarbeitungseinrichtung so konfiguriert, dass sie die Kamera ansteuert und ausliest, um mehrere verschiedene Roh-Übersichtsbilder aufzunehmen. Dabei steuert die Verarbeitungseinrichtung das zweidimensionale Beleuchtungsarray an, um die Einzellichtquellen individuell einzuschalten. Die Verarbeitungseinrichtung ist so konfiguriert, dass sie jedes der Roh-Übersichtsbilder erzeugt, indem sie genau eine der Einzellichtquellen einschaltet, wobei sie für jedes Roh-Übersichtsbild eine individuelle der Einzellichtquellen einschaltet, sodass sie N Roh-Übersichtsbilder aufnimmt.

So erhält man die N Roh-Übersichtsbilder, indem die Einzellichtquellen nacheinander durchgeschaltet werden. Es müssen aber nicht alle Einzellichtquellen verwendet werden. N kann also kleiner sein als die Zahl der verfügbaren Einzellichtquellen. Bevorzugt entspricht N der Gesamtzahl der Einzellichtquellen. Das Durchschalten der verwendeten Einzellichtquellen kann der Reihe nach (also von der ersten bis zur N-ten Einzellichtquelle) oder in einer beliebigen anderen Reihenfolge geschehen.

In den N Roh-Übersichtsbildern befinden sich bei im Probenvolumen angeordnetem Probenträger neben Strukturen der Probe auch Strukturen, die nicht der Probe zuzuordnen sind und die das Auffinden der Probe im Roh-Übersichtsbild erschweren würden. Diese Strukturen, die nicht der Probe zuzuordnen sind, sind beispielsweise Elemente des Bildaufnahmeprozesses, wie z.B. die Einzellichtquellen, oder aber Teile des Probenträgers, z.B. Wandungen von Gefäßen, etc. Sie würden im Übersichtskontrastbild stören.

Deshalb werden in einem Schritt c) Zwischenbilder erzeugt, die dann zum Übersichtskontrastbild kombiniert werden. Die Zwischenbilder unterdrücken die Störungen. Für die Erzeugung der Zwischenbilder wird wie folgt vorgegangen: Zuerst werden für die Pixel der Roh-Übersichtsbilder Helligkeitsränge in bestimmter Zahl definiert. Dann wird jedes der zu erzeugenden Zwischenbilder genau einem Helligkeitsrang zugeordnet. Jedes Zwischenbild wird erzeugt, indem für jedes Pixel dieses Zwischenbildes dasjenige Roh-Übersichtsbild gesucht wird, das am entsprechenden Pixel den Helligkeitsrang hat, der dem jeweiligen Zwischenbild zugeordnet ist. Der Helligkeitswert des entsprechenden Pixels des gefundenen Roh-Übersichtsbilds wird dann für das Zwischenbild-Pixel verwendet. Bei der Kombination zum Übersichtskontrastbild wird das Zwischenbild, welches den höchsten Helligkeitsrang hat, nicht berücksichtigt und nicht in das Übersichtskontrastbild aufgenommen. Die Kombination der Zwischenbilder zum Übersichtskontrastbild geschieht beispielsweise durch Mittelung, aber auch andere Vorgehensweisen der Bildverarbeitung sind möglich. In der Vorrichtung ist die Verarbeitungseinheit so konfiguriert, dass sie diesen Schritt ausführt.

Das erste Zwischenbild (im höchsten Helligkeitsrang) enthält in Ausführungsformen die Bilder aller Einzellichtquellen, die als übersteuerte Bereiche im Bild zu sehen sind und daher Bildinformationen überdecken. Aus diesem Grund wird das erste Zwischenbild bei der Kombination der Zwischenbilder zum Übersichtskontrastbild nicht berücksichtigt. Seine Pixel wären nur ein übersteuerter Bereich, der Bildinformationen möglicherweise überdeckt. Daher wird durch das Weglassen des dem ersten Helligkeitsrang zugeordneten Zwischenbildes erreicht, dass übersteuerte Pixel im Übersichtskontrastbild nicht berücksichtigt werden.

Der Begriff "Rang" impliziert eine Reihenfolge bezogen auf die Helligkeit, mithin also eine Sortierung. Dabei ist nicht die absolute Helligkeit relevant. Das dem ersten Helligkeitsrang zugeordnete Zwischenbild hat in jedem Pixel den Helligkeitswert des hellsten Pixels, das unter allen Roh-Übersichtsbildern an der entsprechenden Stelle zu finden ist. Analoges gilt für die weiteren Helligkeitsränge, die von Rang zu Rang absteigend immer dunklere Pixel enthalten.

Bevorzugt entspricht die Anzahl der Zwischenbilder der Zahl der Helligkeitsränge. Definiert man beispielsweise 12 Helligkeitsränge, werden 12 Zwischenbilder erzeugt. Elf davon werden zum Übersichtskontrastbild kombiniert, da das Zwischenbild des höchsten Helligkeitsrangs nicht teilnimmt. Die Erzeugung der Zwischenbilder aus den N Roh-Übersichtsbildern ist der größte Rechenaufwand. Der Rechenaufwand skaliert mit der Anzahl M an Zwischenbildern. Wird beispielsweise als Anzahl M=6 gewählt, ist der Rechenaufwand und der damit verbundene Zeitaufwand zur Berechnung der Zwischenbilder geringer als bei M=12.

Das erste Zwischenbild enthält alle Bildpunkte im höchsten Helligkeitsrang, es entspricht also an jedem Pixel in der Regel einer Maximum-Projektion über alle N Roh-Übersichtsbilder. Das Zwischenbild, welches dem zweiten Helligkeitsrang zugeordnet ist, hat an jedem Pixel den Helligkeitswert des Helligkeitswerts des Pixels, das unter allen Roh-Übersichtsbildern an diese Stelle im Bild das zweithellste ist. Auch dies kann durch eine entsprechend eingestellte Maximum-Projektion erreicht werden. Analoges gilt für die weiteren Zwischenbilder/Helligkeitsränge.

Durch diese Maßnahmen ist die Sichtbarkeit und die Erkennbarkeit der Probe verbessert, da die Strukturen, die der Probe zuzuordnen sind, im Übersichtskontrastbild herausgearbeitet sind. Durch das Verfahren und die Vorrichtung zum Erzeugen des Übersichtskontrastbildes der Probe im Mikroskop werden Teile des Probenträgers sowie der darauf befindlichen Probe, die für weitere Untersuchungen relevant sind, gut sichtbar abgebildet. Dadurch werden dem Benutzer eine Interaktion mit der Probe sowie eine Navigation auf der Probe deutlich erleichtert. Zudem wird eine automatisierte Auswertung der Probe realisiert, indem die Probe und der Probenträgertyp von der Verarbeitungseinrichtung automatisch erkannt werden können, wodurch sie am Mikroskop selbständig bestimmte Aufnahmeparameter einstellen kann. Dadurch wird die Benutzerfreundlichkeit deutlich erhöht und eine verbesserte Automatisierung des Mikroskopierens eröffnet. Weiter ermöglicht es eine automatische Lokalisierung der Probe im Übersichtskontrastbild, das Mikroskop-Objektiv ohne Zutun des Nutzers so zu positionieren, dass sich die Probe im Aufnahmebereich des Mikroskops befindet. Dieses Vorgehen reduziert die Zeit, die der Nutzer bis zur Aufnahme eines ersten Bildes benötigt drastisch.

Bevorzugt beginnt die Erzeugung der Zwischenbilder, sobald mindestens zwei Roh-Übersichtsbilder aufgenommen sind. Die Zwischenbilder werden dann fortlaufend aktualisiert, wenn weitere Roh-Übersichtsbilder dazukommen. Dadurch wird der Zeitaufwand beim Mikroskopieren weiter reduziert. Das Vorgehen kann auch fortwährend fortgesetzt werden, d.h. die Zwischenbilder und auch das Übersichtskontrastbild werden ständig aktualisiert. Dies ist bei sich verändernden Proben vorteilhaft.

In Ausführungsformen werden die Zwischenbilder vor dem Kombinieren zum Übersichtskontrastbild helligkeitsnormiert, indem der Umfang für die Helligkeit, den die Bildpunkte aufgrund des jeweiligen Helligkeitsranges jedes Zwischenbildes haben, auf einen größeren, bevorzugt für alle Zwischenbilder gleichen, Helligkeitsumfang umgewandelt wird. Dies geschieht bevorzugt mittels einer Min-Max-Normierung, einer Perzentil-Normierung oder eines Histogrammausgleichs. Die Helligkeitsnormierung bewirkt, dass alle Zwischenbilder im Wesentlichen dieselbe Helligkeit oder denselben Helligkeitsumfang haben, obwohl sie ursprünglich in verschiedenen Helligkeitsrängen waren, also vor der Helligkeitsnormierung verschieden hell waren. Art und Parameter der Helligkeitsnormierung bestimmen, wie hell Strukturen im jeweiligen Zwischenbild zu erkennen sind. Wird zum Beispiel eine 10%-/90%-Perzentil-Normierung durchgeführt, sind Strukturen heller als bei einer 2%-/98%-Perzentil-Normierung. In der Vorrichtung wird diese Helligkeitsnormierung von der Verarbeitungseinrichtung ausgeführt. Da der Rechenaufwand größtenteils in der Erzeugung der Zwischenbilder liegt, kann auch mit mehreren Einstellungen mehrmals helligkeitsnormiert werden.

In Abwandlungen werden zwei Übersichtskontrastbilder erzeugt. Ein erstes Übersichtskontrastbild wird aus den Zwischenbildern ohne Helligkeitsnormierung erzeugt. Dieses erste Übersichtskontrastbild ist besonders gut für die Darstellung sehr heller Strukturen im Zwischenbild, wie zum Beispiel Glaskanten, geeignet. Ein zweites Übersichtskontrastbild wird aus den Zwischenbildern mit vorangegangener Helligkeitsnormierung der Zwischenbilder erzeugt. Es ist besser geeignet für dunklere Strukturen im Zwischenbild. Bevorzugt werden das erste und das zweite Übersichtskontrastbild kombiniert, um ein verbessertes Übersichtskontrastbild zu erhalten, das sehr helle und sehr dunkle Bereiche gleichermaßen gut darstellt.

Bevorzugt wird das Übersichtskontrastbild nachbearbeitet. Typisch ist beispielsweise ein Weißabgleich. Ergebnisse und Zwischenergebnisse werden dem Nutzer bevorzugt auf einer Abbildungsvorrichtung angezeigt.

Die Erfindung wird nachfolgend unter Bezugnahme auf die Zeichnung beispielhalber noch näher erläutert. In der Zeichnung zeigt:
- Fig. 1: ein Ablaufdiagramm des Verfahrens zum Erzeugen eines Übersichtskontrastbildes eines Probenträgers in einem Mikroskop,
- Fig. 2: eine schematische Darstellung der Erzeugung eines Zwischenbildes, und
- Fig. 3: eine Vorrichtung zum Erzeugen eines Übersichtskontrastbildes eines Probenträgers in einem Mikroskop.

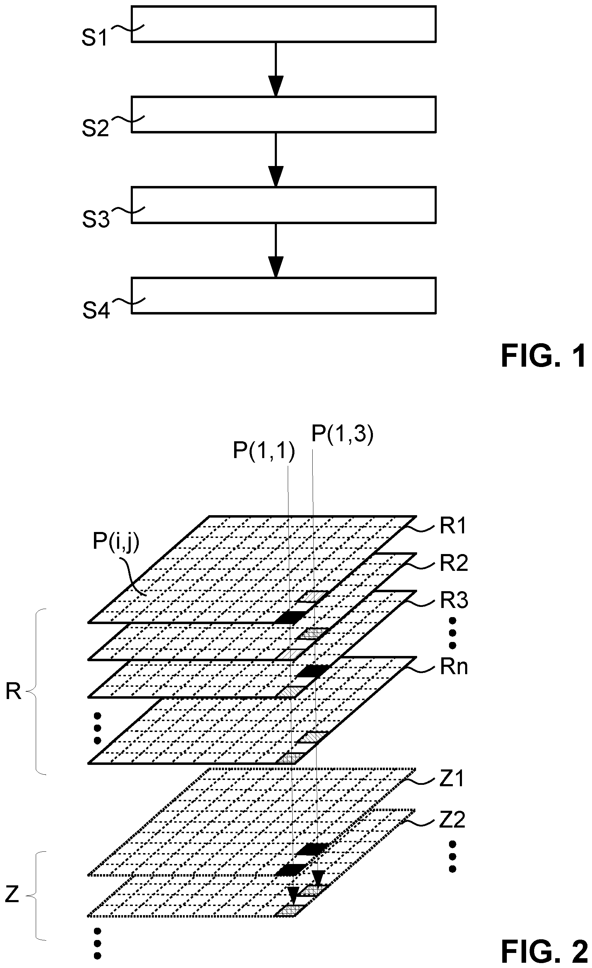

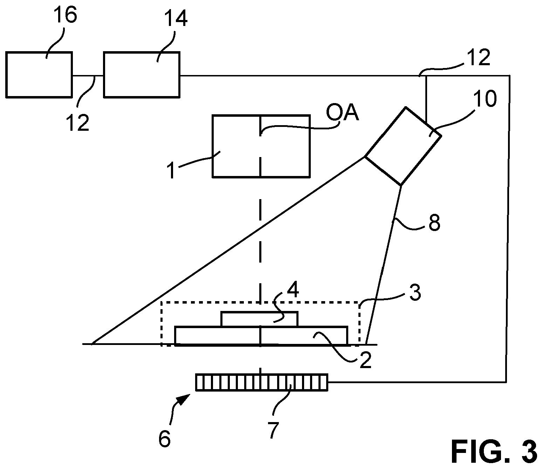

In Fig. 1 ist ein Ablaufdiagramm eines Verfahrens zum Erzeugen eines Übersichtskontrastbildes dargestellt, das mit dem in Fig. 3 gezeigten Mikroskop 1 ausgeführt wird. Dabei wird ein Probenvolumen 3, in dem ein Probenträger 2 mit Probe 4 anordenbar ist, abgebildet. In einem ersten Schritt S1 wird der Probenträger 2 im Durchlicht aus einem zweidimensionalen Beleuchtungsarray 6, das individuell schaltbare Einzellichtquellen 7 hat, beleuchtet. Beispielsweise wird als zweidimensionales Beleuchtungsarray 6 ein LED-Array mit Einzel-LED verwendet. Dabei werden die Einzellichtquellen 7 einzeln durchgeschaltet, so dass mehrere verschiedene Beleuchtungszustände erhalten werden.

In einem zweiten Schritt S2 wird für jeden Beleuchtungszustand ein Roh-Übersichtsbild R des Probenvolumens 3, d.h. im Ausführungsbeispiel gemäß Fig. 1 des Probenträgers 2 mit Probe 4, aufgenommen. Dadurch werden Roh-Übersichtsbilder R1 bis Rn erzeugt, indem zur Bildaufnahme genau eine der Einzellichtquellen 7 eingeschaltet wird. Für jedes Roh-Übersichtsbild R1 bis Rn wird also eine individuelle Einzellichtquelle 7 eingeschaltet, sodass N Roh-Übersichtsbilder R1 bis Rn aufgenommen werden. Zu jedem Roh-Übersichtsbild R1 bis Rn leuchtet eine andere Einzellichtquelle. Alle Roh-Übersichtsbilder R1 bis Rn werden mit derselben Kamera aufgenommen. Die Position dieser Kamera bleibt für die Aufnahme aller Roh-Übersichtsbilder R1 bis Rn gleich. Bevorzugt entspricht N der Anzahl der Einzellichtquellen 7. Es müssen aber nicht alle verfügbaren Einzellichtquellen verwendet werden. Das Durchschalten der Einzellichtquellen 7 kann der Reihe nach (also von der ersten bis zur N-ten Einzellichtquelle 7) oder in einer beliebigen anderen Reihenfolge geschehen.

In den Roh-Übersichtsbildern R1 bis Rn befinden sich neben Strukturen der Probe 4 auch Strukturen, die nicht der Probe 4 zuzuordnen sind und die das Auffinden der Probe 4 erschweren würden. Diese Strukturen, die nicht der Probe 4 zuzuordnen sind, sind beispielsweise Elemente des Bildaufnahmeprozesses, wie die Einzellichtquellen 7.

Um diese Störungen zu unterdrücken, werden in einem dritten Schritt S3 Zwischenbilder Z erzeugt, die dann in einem Schritt S4 zu einem Übersichtskontrastbild kombiniert werden.

Die Zwischenbilder Z unterdrücken die Störungen. Für die Erzeugung der Zwischenbilder Z werden im Schritt S3 zuerst Helligkeitsränge in bestimmter Zahl definiert. Sie gelten für die Helligkeit der Pixel P(i, j) der Roh-Übersichtsbilder R1 bis Rn. Es gibt dadurch hellste Pixel P(i, j), zweithellste Pixel P(i, j), usw. Der Begriff "Helligkeitsrang" drückt also eine Reihung nach Helligkeit, aber keine absoluten Helligkeitswerte aus. Jedes der zu erzeugenden Zwischenbilder Z wird genau einem Helligkeitsrang zugeordnet.

Dann wird jedes Zwischenbild Z erzeugt, indem für jedes Pixel P(i, j) dieses Zwischenbildes Z in den Roh-Übersichtsbildern R1 bis Rn das Pixel P(i, j) gesucht wird, das den Helligkeitsrang hat, der dem jeweiligen Zwischenbild Z zugeordnet ist. Der Helligkeitswert des gefundenen Pixels wird eingesetzt und für das Pixel P(i, j) dieses Zwischenbildes Z verwendet. Dieses Vorgehen ist in Fig. 2 visualisiert.

Fig. 2 zeigt eine schematische Darstellung der Erzeugung der Zwischenbilder Z aus den Roh-Übersichtsbildern R1 bis Rn. Es sind die einzelnen Roh-Übersichtsbilder R1 bis Rn dargestellt, die jeweils aus Pixeln P(i, j) zusammengesetzt sind. Ein Pixel P(i, j) charakterisiert bei einer Rastergrafik einen Ort im Bild, und ihm ist ein Pixelwert, nämlich ein Helligkeitswert zugeordnet, den das Bild an diesem Ort hat. Für das Zwischenbild Z1, das dem ersten Helligkeitsrang zugeordnet ist, wird für jedes Pixel P(i, j) unter allen Roh-Übersichtsbildern R1 bis Rn das jeweilige Roh-Übersichtsbild R1 bis Rn gesucht, das dort das Pixel P(i, j) mit dem ersten Helligkeitsrang, d.h. das Pixel P(i, j) mit dem größten Pixelwert hat, und dessen Helligkeitswert für das Pixel P(i, j) des Zwischenbildes Z1 übernommen. In Fig. 2 ist die Helligkeit durch die Schraffur/Schwärze der Pixel P(i, j) kodiert. Nimmt man beispielsweise das Pixel P(1,1), d.h. das Pixel in Zeile 1, Spalte 1, so wird dort für das Zwischenbild Z1 der Helligkeitswert des hellsten Pixels P(1,1) eingesetzt, der unter allen Roh-Übersichtsbildern R1 bis Rn an P(1,1) zu finden ist. Im dargestellten Beispiel wäre es das Pixel P(1,1) des Roh-Übersichtsbildes R1. Für das Pixel P(1,3) wäre es z. B. das Pixel P(1,3) aus R3.

Analog wird für das Zwischenbild Z2, das dem zweiten Helligkeitsrang zugeordnet ist, verfahren. Hierfür wird für P(1,1) unter allen Roh-Übersichtsbildern R1 bis Rn dasjenige gesucht, das an P(1,1) das zweithellste unter allen Pixeln P(1,1) hat, also das Pixel P(1,1) des zweiten Helligkeitsrangs. In Fig. 2 ist es bei P(1,1) das Pixel P(1,1) aus Rn, bei P(1,3) das entsprechende Pixel P(1,3) aus R2.

So wird dann für alle anderen Zwischenbilder Z verfahren. Als Resultat hat jedes Zwischenbild Z ausschließlich Pixel P(i, j), die seinem Helligkeitsrang entsprechen.

Im vierten Schritt S4 werden anschließend die Zwischenbilder Z zum Übersichtskontrastbild kombiniert, wobei das Zwischenbild Z1 mit dem ersten Helligkeitsrang nicht berücksichtigt und nicht in das Übersichtskontrastbild aufgenommen wird. Hierdurch sind Übersteuerungseffekte unterdrückt, da die hellsten Pixel P(i, j), also die im höchsten Helligkeitsrang, welche als übersteuerte Bereiche wahrgenommen würden, nicht übernommen werden und so keine Bildinhalte des Übersichtskontrastbildes überdecken. Die im Übersichtskontrastbild nicht berücksichtigten Pixel P(i, j) entsprechen in Ausführungsformen Bildern der Einzellichtquellen 7, die zur Aufnahme der Roh-Übersichtsbilder R1 bis Rn jeweils eingeschaltet wurden.

Weiter ist die Sichtbarkeit und die Erkennbarkeit der Probe 4 verbessert, da die Strukturen, die der Probe 4 zuzuordnen sind, durch einen Kontrast zu einem Umfeld der Probe 4 im Übersichtskontrastbild herausgearbeitet sind.

In der Vorrichtung ist die Verarbeitungseinrichtung 14 so konfiguriert, dass sie diesen Schritt ausführt.

Die Kombination der Zwischenbilder Z zum Übersichtskontrastbild geschieht beispielsweise durch Mittelung, aber auch andere Vorgehensweisen der Bildverarbeitung sind möglich, beispielsweise eine Min-Projektion, eine Max-Projektion oder eine Median-Projektion.

Bevorzugt beginnt die Erzeugung der Zwischenbilder Z, sobald mindestens zwei Roh-Übersichtsbilder R aufgenommen sind. Die Zwischenbilder werden dann fortlaufend aktualisiert, wenn weitere Roh-Übersichtsbilder R dazukommen. Dadurch wird der Zeitaufwand reduziert.

Die Zwischenbilder Z werden optional nach ihrer Erzeugung helligkeitsnormiert, indem der Umfang für die Helligkeit, den seine Pixel P(i, j) haben, auf einen größeren, bevorzugt für alle Zwischenbilder Z gleichen, Helligkeitsumfang umgewandelt wird. Dabei wird beispielsweise ein Helligkeitsumfang mit einem Helligkeitswertebereich von 55% bis 60% beinhaltet, auf einen Helligkeitsumfang von 0% bis 100% "ausgedehnt". Dies geschieht bevorzugt mittels einer Min-Max-Normierung, einer Perzentil-Normierung oder eines Histogrammausgleichs. Dies erreicht die bereits beschriebene Helligkeitsausgleichung unter den Zwischenbildern Z.

Bevorzugt wird das Übersichtskontrastbild weiter nachbearbeitet. Typisch ist beispielsweise ein Weißabgleich.

In Fig. 3 ist die Vorrichtung zum Erzeugen eines Übersichtskontrastbildes eines Probenträgers 2 in einem Mikroskop 1 dargestellt. Entlang einer optischen Achse OA erfasst das Mikroskop 1 mit einem Objektiv (nicht separat gezeigt) ein Probenvolumen 3, in dem eine auf einem Probenträger 2 befindliche Probe 4 angeordnet ist. Das Probenvolumen 3 und damit die Probe 4, wird im Durchlicht von einer zweidimensionalen Beleuchtungsquelle 6 mit Einzellichtquellen 7 beleuchtet. Auf das Probenvolumen 3 und damit den Probenträger 2 ist ein Bildfeld 8 einer Kamera 10 gerichtet. Die Beleuchtungsquelle 6 und die Kamera 10 sind mit der Verarbeitungseinrichtung 14 verbunden, entweder, wie in Fig. 2 dargestellt, über elektrische Leitungen 12, oder über Funk oder Ähnliches. Die Verarbeitungseinrichtung 14 ist wiederum über elektrische Leitungen 12, Funk oder Ähnliches mit einer Anzeigevorrichtung 16 verbunden.

Die Kamera 10 erfasst im ihrem Bildfeld 8 das Probenvolumen 3 und die darin befindliche Probe 4 auf dem Probenträger 2. Die Verarbeitungseinrichtung 14 steuert die Kamera 10 an und liest sie aus, um verschiedene Roh-Übersichtsbilder R1 bis Rn des Probenvolumens 3 aufzunehmen. Dabei steuert die Verarbeitungseinrichtung 14 ebenfalls das zweidimensionale Beleuchtungsarray 6, das individuell schaltbare Einzellichtquellen 7 hat und das Probenvolumen 3 im Durchlicht beleuchtet, an, um die Einzellichtquellen 7 individuell einzuschalten. Als zweidimensionale Beleuchtungsquelle 6 wird beispielsweise ein LED-Array mit einzelnen LED benutzt, die von der Verarbeitungseinrichtung 14 der Reihe nach oder in einer beliebigen Reihenfolge durchgeschaltet werden. Die Position und die Ausrichtung der Kamera 10 bleiben während der Aufnahme der Roh-Übersichtsbilder R1 bis Rn zu jeder Zeit gleich.

Die Verarbeitungseinrichtung umfasst z. B. einen Prozessor und einen RAM und ist so konfiguriert, dass sie jedes der Roh-Übersichtsbilder R1 bis Rn erzeugt, indem sie genau eine der Einzellichtquellen 7 einschaltet, wobei sie für jedes Roh-Übersichtsbild R1 bis Rn eine individuelle Einzellichtquelle einschaltet, so dass sie digital N Roh-Übersichtsbilder aufnimmt. Sie erzeugt und verarbeitet die Roh-Übersichtsbilder R1 bis Rn gemäß dem anhand des Ablaufdiagramms aus Fig. 1 erläuterten Verfahrens. Bevorzugt zeigt sie Ergebnisse und/oder Zwischenergebnisse dem Nutzer auf der Anzeigevorrichtung 16, die z. B. einen Monitor oder ein Display aufweist, an.

### Bezugszeichenliste

- 1: Mikroskop
- 2: Probenträger
- 3: Probenvolumen
- 4: Probe
- 6: Beleuchtungsarray
- 7: Einzellichtquelle
- 8: Bildfeld
- 10: Kamera
- 12: elektrische Leitungen
- 14: Verarbeitungseinrichtung
- 16: Anzeigevorrichtung
- OA: optische Achse
- S1-S4: Schritt
- Z: Zwischenbild
- P(i,j): Pixel (Zeile i, Spalte j)
- P(1,1): Pixel (Zeile 1, Spalte 1)
- R1-Rn: Roh-Übersichtsbild

## Patentansprüche

1. Verfahren zum Erzeugen eines Übersichtskontrastbildes eines Probenträgers (2) in einem Mikroskop (1), das eine auf dem Probenträger (2) angeordnete Probe (4) abbildet, bei dem
a) der Probenträger (2) im Durchlicht aus einem zweidimensionalen Beleuchtungsarray (6) beleuchtet wird, das individuell schaltbare Einzellichtquellen (7) hat,
b) mehrere verschiedene Roh-Übersichtsbilder (R1 - Rn) des Probenträgers (2) aufgenommen werden,
**dadurch gekennzeichnet, dass**
jedes der Roh-Übersichtsbilder (R1 - Rn) erzeugt wird, indem genau eine der Einzellichtquellen (7) eingeschaltet wird, wobei für jedes Roh-Übersichtsbild (R1 - Rn) eine individuelle der Einzellichtquellen (7) eingeschaltet wird, so dass N Roh-Übersichtsbilder (R1 - Rn) aufgenommen werden,
c) aus den Roh-Übersichtsbildern (R1 - Rn) Zwischenbilder (Z) erzeugt werden, indem
c1) Helligkeitsränge für Pixel (P(i, j)) der Roh-Übersichtsbilder (R1 - Rn) definiert werden,
c2) jedes Zwischenbild (Z) genau einem Helligkeitsrang zugeordnet wird und
c3) in jedem Zwischenbild (Z) für jedes Pixel (P(i, j)) dieses Zwischenbildes (Z) in den Roh-Übersichtsbildern (R1 - Rn) das Roh-Übersichtsbild (R1 - Rn) gesucht wird, das am entsprechenden Pixel (P(i, j)) den Helligkeitsrang hat, der dem jeweiligen Zwischenbild (Z) zugeordnet ist, und der Helligkeitswert des entsprechenden Pixels (P(i, j)) des gefunden Roh-Übersichtsbilds (R1 - Rn) eingesetzt wird, und
d) die Zwischenbilder (Z) zu dem Übersichtskontrastbild kombiniert werden, wobei das dem ersten Helligkeitsrang zugeordnete Zwischenbild (Z) nicht berücksichtigt und nicht in das Übersichtskontrastbild aufgenommen wird.

2. Verfahren nach Anspruch 1, **dadurch gekennzeichnet, dass** die Suche in Unterschritt c3) eine Min/Max-Projektion umfasst.

3. Verfahren nach Anspruch 1 oder 2, **dadurch gekennzeichnet, dass** die Erzeugung der Zwischenbilder (Z) beginnt, sobald mindestens zwei Roh-Übersichtsbilder (R) aufgenommen sind und die Zwischenbilder (Z) fortlaufend aktualisiert werden, wenn weitere Roh-Übersichtsbilder (R) hinzukommen.

4. Verfahren nach einem der der obigen Ansprüche, **dadurch gekennzeichnet, dass** in Schritt d) nach der Erzeugung der Zwischenbilder (Z) die Zwischenbilder (Z) nach ihrer Erzeugung helligkeitsnormiert werden, indem der Umfang für die Helligkeit, den die Pixel (P(i, j) aufgrund des jeweiligen Helligkeitsrangs jedes Zwischenbildes (Z) haben, auf einen größeren, bevorzugt für alle Zwischenbilder (Z) gleichen, Helligkeitsumfang umgewandelt wird.

5. Verfahren nach Anspruch 4, **dadurch gekennzeichnet, dass** die Helligkeitsnormierung der Zwischenbilder (Z) mittels einer Min-Max-Normierung, einer Perzentil-Normierung oder einem Histogrammausgleich erfolgt.

6. Verfahren nach einem der obigen Ansprüche, **dadurch gekennzeichnet, dass** das Übersichtskontrastbild durch Methoden der Bildbearbeitung nachbearbeitet wird.

7. Verfahren nach einem der obigen Ansprüche, **dadurch gekennzeichnet, dass** in Schritt d) die Zwischenbilder (7) unter Verwendung einer Mittelung, einer Min-Projektion, einer Max-Projektion und/oder einer Median-Projektion zum Übersichtskontrastbild kombiniert werden.

8. Vorrichtung zum Erzeugen eines Übersichtskontrastbildes eines in einem Probenvolumen (3) anzuordnenden Probenträgers (2) in einem Mikroskop (1), mit
- einer Kamera (10), die ein das Probenvolumen (3) erfassendes Bildfeld (8) aufweist,
- einem zweidimensionalen Beleuchtungsarray (6), das individuell schaltbare Einzellichtquellen (7) hat und das Probenvolumen (3) im Durchlicht beleuchtet, und
- einer Verarbeitungseinrichtung (14), die die Kamera (10) ansteuert und ausliest, um mehrere verschiedene Roh-Übersichtsbilder (R1 - Rn) des Probenvolumens (3) aufzunehmen,
**dadurch gekennzeichnet, dass**
- die Verarbeitungseinrichtung (14) das zweidimensionale Beleuchtungsarray (6) ansteuert, um die Einzellichtquellen (7) individuell einzuschalten,
- die Verarbeitungseinrichtung (14) so konfiguriert ist, dass sie jedes der Roh-Übersichtsbilder (R1 - Rn) erzeugt, indem sie genau eine der Einzellichtquellen (7) einschaltet, wobei sie für jedes Roh-Übersichtsbild (R1 - Rn) eine individuelle der Einzellichtquellen (7) einschaltet, so dass sie N Roh-Übersichtsbilder (R1 - Rn) aufnimmt,
- die Verarbeitungseinrichtung (14) so konfiguriert ist, dass sie aus den Roh-Übersichtsbildern (R1 - Rn) Zwischenbilder (Z) erzeugt, indem sie Helligkeitsränge für Pixel (P(i, j)) der Roh-Übersichtsbilder (R1 - Rn) definiert, jedes Zwischenbild (Z) genau einem Helligkeitsrang zuordnet und in jedem Zwischenbild (Z) für jedes Pixel (P(i, j)) dieses Zwischenbildes (Z) in den Roh-Übersichtsbildern (R1 - Rn) das Roh-Übersichtsbild (R1 - Rn) sucht, das am entsprechenden Pixel (P(i, j) den Helligkeitsrang hat, der dem jeweiligen Zwischenbild (Z) zugeordnet ist, und den Helligkeitswert des entsprechenden Pixels (P(i, j) des gefundenen Roh-Übersichtsbilds (R1 - Rn) einsetzt, und
- die Verarbeitungseinrichtung (14) so konfiguriert ist, dass sie die Zwischenbilder (Z) zu dem Übersichtskontrastbild kombiniert, wobei sie das dem ersten Helligkeitsrang zugeordnete Zwischenbild (Z) nicht berücksichtigt und nicht in das Übersichtskontrastbild aufnimmt.

9. Vorrichtung nach Anspruch 8, **dadurch gekennzeichnet, dass** die Verarbeitungseinrichtung (14) so konfiguriert ist, dass sie bei der Suche der Pixel (P(i, j) in den Roh-Übersichtsbildern (R1 - Rn) eine Min/Max-Projektion anwendet.

10. Vorrichtung nach Anspruch 8 oder 9, **dadurch gekennzeichnet, dass** die Verarbeitungseinrichtung (14) so konfiguriert ist, dass sie mit der Erzeugung der Zwischenbilder (Z) beginnt sobald mindestens zwei Roh-Übersichtsbilder (R) aufgenommen sind und die Zwischenbilder (Z) fortlaufend aktualisiert, wenn weitere Roh-Übersichtsbilder (R) hinzukommen.

11. Vorrichtung nach einem der Ansprüche 8 bis 10, **dadurch gekennzeichnet, dass** die Verarbeitungseinrichtung (14) so konfiguriert ist, dass sie nach der Erzeugung der Zwischenbilder (Z) die Zwischenbilder (Z) helligkeitsnormiert, indem sie den Umfang für die Helligkeit, den die Pixel (P(i, j)) aufgrund des jeweiligen Helligkeitsrangs jedes Zwischenbildes (Z) haben, auf einen größeren, bevorzugt für alle Zwischenbilder (Z) gleichen, Helligkeitsumfang umwandelt.

12. Vorrichtung nach Anspruch 11, **dadurch gekennzeichnet, dass** die Verarbeitungseinrichtung (14) so konfiguriert ist, dass sie die Zwischenbilder (Z) mittels einer Min-Max-Normierung, einer Perzentil-Normierung oder einem Histogrammausgleich helligkeitsnormiert.

13. Vorrichtung nach einem der Ansprüche 8 bis 12, **dadurch gekennzeichnet, dass** das Übersichtskontrastbild mit Methoden der Bildbearbeitung nachbearbeitet wird.

14. Vorrichtung nach einem der Ansprüche 8 bis 13, **dadurch gekennzeichnet, dass** die Verarbeitungseinrichtung so konfiguriert ist, dass sie die Zwischenbilder (7) unter Verwendung einer Mittelung, einer Min-Projektion, einer Max-Projektion und/oder einer Median-Projektion zum Übersichtskontrastbild kombiniert.

## Claims

1. Method for creating an overview contrast image of a sample carrier (2) in a microscope (1), which images a sample (4) arranged on the sample carrier (2), wherein
a) the sample carrier (2) is illuminated in transmitted light from a two-dimensional illumination array (6) which has individually switchable individual light sources (7),
b) a plurality of different raw overview images (R1 - Rn) of the sample carrier (2) are recorded,
**characterized in that**
each of the raw overview images (R1 - Rn) is created by switching on exactly one of the individual light sources (7), with a single one of the individual light sources (7) being switched on for each raw overview image (R1 - Rn) such that N raw overview images (R1 - Rn) are recorded,
c) intermediate images (Z) are created from the raw overview images (R1 - Rn) by
c1) defining brightness ranks for pixels (P(i, j)) of the raw overview images (R1 - Rn),
c2) assigning each intermediate image (Z) to exactly one brightness rank and
c3) in each intermediate image (Z) and for each pixel (P(i, j)) of this intermediate image (Z), searching for the raw overview image (R1 - Rn) in the raw overview images (R1 - Rn) which at the corresponding pixel (P(i, j)) has the brightness rank assigned to the respective intermediate image (Z), and using the brightness value of the corresponding pixel (P(i, j)) of the found raw overview image (R1 - Rn), and
d) the intermediate images (Z) are combined to form the overview contrast image, the intermediate image (Z) assigned to the first brightness rank not being taken into account and not being incorporated in the overview contrast image.

2. Method according to Claim 1, **characterized in that** the search in sub-step c3) comprises a min/max projection.

3. Method according to Claim 1 or 2, **characterized in that** the creation of the intermediate images (Z) begins as soon as at least two raw overview images (R) have been recorded, and the intermediate images (Z) are continuously updated when further raw overview images (R) are added.

4. Method according to any of the preceding claims, **characterized in that** in step d) following the creation of the intermediate images (Z), the intermediate images (Z) following their creation are normalized in terms of brightness by converting the range of brightness that the pixels (P(i, j)) have due to the respective brightness rank of each intermediate image (Z) to a greater range of brightness, which is preferably the same for all intermediate images (Z).

5. Method according to Claim 4, **characterized in that** the brightness normalization of the intermediate images (Z) is carried out by means of a min-max normalization, a percentile normalization or a histogram compensation.

6. Method according to any of the preceding claims, **characterized in that** the overview contrast image is post-processed using image processing techniques.

7. Method according to any of the preceding claims, **characterized in that** in step d) the intermediate images (7) are combined to form the overview contrast image using averaging, a min projection, a max projection and/or a median projection.

8. Apparatus for creating an overview contrast image of a sample carrier (2) to be arranged in a sample volume (3) in a microscope (1), having
- a camera (10) having an image field (8) capturing the sample volume (3),
- a two-dimensional illumination array (6), which has individually switchable individual light sources (7) and illuminates the sample volume (3) in transmitted light, and
- a processing device (14) which controls and reads the camera (10) in order to record a plurality of different raw overview images (R1 - Rn) of the sample volume (3),
**characterized in that**
- the processing device (14) controls the two-dimensional illumination array (6) in order to switch on the individual light sources (7) individually,
- the processing device (14) is configured to create each of the raw overview images (R1 - Rn) by switching on exactly one of the individual light sources (7), switching on a single one of the individual light sources (7) for each raw overview image (R1 - Rn) such that it records N raw overview images (R1 - Rn),
- the processing device (14) is configured to create intermediate images (Z) from the raw overview images (R1
- Rn) by defining brightness ranks for pixels (P(i, j)) of the raw overview images (R1 - Rn), assigning each intermediate image (Z) to exactly one brightness rank and in each intermediate image (Z) and for each pixel (P(i, j)) of this intermediate image (Z), searching for the raw overview image (R1 - Rn) in the raw overview images (R1
- Rn) which at the corresponding pixel (P(i, j)) has the brightness rank assigned to the respective intermediate **image** (Z), and using the brightness value of the corresponding pixel (P(i, j)) of the found raw overview image (R1 - Rn), and
- the processing device (14) is configured such that it combines the intermediate images (Z) to form the overview contrast image without taking into account the intermediate image (Z) assigned to the first brightness rank and without incorporating this intermediate image in the overview contrast image.

9. Apparatus according to Claim 8, **characterized in that** the processing device (14) is configured in such a way that it applies a min/max projection in the search for the pixels (P(i, j)) in the raw overview images (R1 - Rn).

10. Apparatus according to Claim 8 or 9, **characterized in that** the processing device (14) is configured in such a way that it begins with the creation of the intermediate images (Z) as soon as at least two raw overview images (R) have been recorded and continuously updates the intermediate images (Z) when further raw overview images (R) are added.

11. Apparatus according to any of Claims 8 to 10, **characterized in that** the processing device (14) is configured in such a way that, following the creation of the intermediate images (Z), it normalizes the intermediate images (Z) in terms of brightness by converting the range of brightness that the pixels (P(i, j)) have due to the respective brightness rank of each intermediate image (Z) to a greater range of brightness, which is preferably the same for all intermediate images (Z).

12. Apparatus according to Claim 11, **characterized in that** the processing device (14) is configured in such a way that it normalizes the brightness of the intermediate images (Z) by means of a min-max normalization, a percentile normalization or a histogram compensation.

13. Apparatus according to any of Claims 8 to 12, **characterized in that** the overview contrast image is post-processed using image processing techniques.

14. Method according to any of Claims 8 to 13, **characterized in that** the processing device is configured in such a way that it combines the intermediate images (7) to form the overview contrast image using averaging, a min projection, a max projection and/or a median projection.

## Revendications

1. Procédé de génération d'une image contrastée d'ensemble d'un porte-échantillon (2) dans un microscope (1), qui représente l'image d'un échantillon (4) disposé sur le porte-échantillon (2), avec lequel
a) le porte-échantillon (2) est éclairé en lumière transmise à partir d'un réseau d'éclairage bidimensionnel (6) qui comporte des sources lumineuses individuelles (7) pouvant être commutées individuellement,
b) plusieurs images d'ensemble brutes (R1 - Rn) différentes du porte-échantillon (2) sont capturées,
**caractérisé en ce que**
chacune des images d'ensemble brutes (R1 - Rn) est générée en allumant exactement une des sources lumineuses individuelles (7), une source individuelle des sources lumineuses individuelles (7) étant allumée pour chaque image d'ensemble brute (R1 - Rn), de sorte que N images d'ensemble brutes (R1 - Rn) sont capturées,
c) des images intermédiaires (Z) sont générées à partir des images d'ensemble brutes (R1 - Rn), **en ce que**
c1) des rangs de luminosité pour les pixels (P(i, j)) des images d'ensemble brutes (R1 - Rn) sont définis,
c2) chaque image intermédiaire (Z) est associée exactement à un rang de luminosité et
c3) dans chaque image intermédiaire (Z), pour chaque pixel (P(i, j)) de cette image intermédiaire (Z), l'image d'ensemble brute (R1 - Rn) qui possède, au niveau du pixel (P(i, j)) correspondant, le rang de luminosité qui est associé à l'image intermédiaire (Z) respective est recherchée dans les images d'ensemble brutes (R1 - Rn), et la valeur de luminosité du pixel (P(i, j)) correspondant de l'image d'ensemble brute (R1 - Rn) trouvée est utilisée, et
d) les images intermédiaires (Z) sont combinées en l'image contrastée d'ensemble, l'image intermédiaire (Z) qui est associée au premier rang de luminosité n'étant pas prise en compte et n'étant pas capturée dans l'image contrastée d'ensemble.

2. Procédé selon la revendication 1, **caractérisé en ce que** la recherche à la sous-étape c3) comprend une projection min/max.

3. Procédé selon la revendication 1 ou 2, **caractérisé en ce que** la génération des images intermédiaires (Z) commence dès qu'au moins deux images d'ensemble brutes (R) sont capturées et les images intermédiaires (Z) sont mises à jour en continu lorsque des images d'ensemble brutes (R) supplémentaires sont ajoutées.

4. Procédé selon l'une des revendications ci-dessus, **caractérisé en ce que**, à l'étape d), après la génération des images intermédiaires (Z), les images intermédiaires (Z) sont normalisées en luminosité après leur génération, en convertissant l'étendue pour la luminosité que présentent les pixels (P(i, j)), du fait du rang de luminosité respectif de chaque image intermédiaire (Z), en une étendue de luminosité plus grande, de préférence identique pour toutes les images intermédiaires (Z).

5. Procédé selon la revendication 4, **caractérisé en ce que** la normalisation de la luminosité des images intermédiaires (Z) est effectuée au moyen d'une normalisation min-max, d'une normalisation du percentile ou d'un équilibrage d'histogramme.

6. Procédé selon l'une des revendications ci-dessus, **caractérisé en ce que** l'image contrastée d'ensemble est post-traitée par des méthodes de traitement d'image.

7. Procédé selon l'une des revendications ci-dessus, **caractérisé en ce que** dans l'étape d), les images intermédiaires (7) sont combinées en utilisant un calcul de la moyenne, une projection min, une projection max et/ou une projection médiane pour former l'image contrastée d'ensemble.

8. Arrangement pour générer une image contrastée d'ensemble d'un porte-échantillon (2) à disposer dans un volume d'échantillon (3) dans un microscope (1), comprenant
- une caméra (10), qui possède un champ d'image (8) détectant le volume d'échantillon (3),
- un réseau d'éclairage bidimensionnel (6), qui comporte des sources lumineuses individuelles (7) pouvant être commutées individuellement et qui éclaire le volume d'échantillon (3) en lumière transmise, et
- un dispositif de traitement (14), qui commande et lit la caméra (10) afin de capturer plusieurs images d'ensemble brutes (R1 - Rn) différentes du volume d'échantillon (3),
**caractérisé en ce que**
- le dispositif de traitement (14) commande le réseau d'éclairage bidimensionnel (6) pour allumer individuellement les sources lumineuses individuelles (7),
- le dispositif de traitement (14) est configuré de telle sorte qu'il génère chacune des images d'ensemble brutes (R1-Rn) **en ce qu'**il allume exactement une des sources lumineuses individuelles (7), celui-ci allumant une source individuelle des sources lumineuses individuelles (7) pour chaque image d'ensemble brute (R1-Rn) de manière à capturer N images d'ensemble brutes (R1-Rn),
- le dispositif de traitement (14) est configuré de telle sorte qu'il génère des images intermédiaires (Z) à partir des images d'ensemble brutes (R1 - Rn) **en ce qu'**il définit des rangs de luminosité pour des pixels (P(i, j)) des images d'ensemble brutes (R1 - Rn), associe chaque image intermédiaire (Z) exactement à un rang de luminosité et recherche, dans chaque image intermédiaire (Z) pour chaque pixel (P(i, j)) de cette image intermédiaire (Z) dans les images d'ensemble brutes (R1
- Rn), l'image d'ensemble brute (R1 - Rn) qui possède, au niveau du pixel (P(i, j)) correspondant, le rang de luminosité qui est associé à l'image intermédiaire (Z) respective, et utilise la valeur de luminosité du pixel (P(i, j)) correspondant de l'image d'ensemble brute (R1 - Rn) trouvée, et
- le dispositif de traitement (14) est configuré de telle sorte qu'il combine les images intermédiaires (Z) en l'image contrastée d'ensemble, en ne tenant pas compte de l'image intermédiaire (Z) associée au premier rang de luminosité et en ne l'incluant pas dans l'image contrastée d'ensemble.

9. Arrangement selon la revendication 8, **caractérisé en ce que** le dispositif de traitement (14) est configuré pour appliquer une projection min/max lors de la recherche des pixels (P(i, j)) dans les images d'ensemble brutes (R1 - Rn).

10. Arrangement selon la revendication 8 ou 9, **caractérisé en ce que** le dispositif de traitement (14) est configuré de telle sorte qu'il commence la génération des images intermédiaires (Z) dès qu'au moins deux images d'ensemble brutes (R) sont capturées et met à jour continuellement les images intermédiaires (Z) lorsque des images d'ensemble brutes (R) supplémentaires sont ajoutées.

11. Arrangement selon l'une des revendications 8 à 10, **caractérisé en ce que** le dispositif de traitement (14) est configuré de telle sorte qu'après la génération des images intermédiaires (Z), il normalise en luminosité les images intermédiaires (Z), en convertissant l'étendue pour la luminosité que présentent les pixels (P(i, j)), du fait du rang de luminosité respectif de chaque image intermédiaire (Z), en une étendue de luminosité plus grande, de préférence identique pour toutes les images intermédiaires (Z).

12. Arrangement selon la revendication 11, **caractérisé en ce que** le dispositif de traitement (14) est configuré de telle sorte qu'il normalise en luminosité les images intermédiaires (Z) au moyen d'une normalisation min-max, d'une normalisation du percentile ou d'un équilibrage d'histogramme.

13. Arrangement selon l'une des revendications 8 à 12, **caractérisé en ce que** l'image contrastée d'ensemble est post-traitée avec des méthodes de traitement d'image.

14. Arrangement selon l'une des revendications 8 à 13, **caractérisé en ce que** le dispositif de traitement est configuré de telle sorte qu'il combine les images intermédiaires (7) en utilisant un calcul de la moyenne, une projection min, une projection max et/ou une projection médiane pour former l'image contrastée d'ensemble.
